(19) Europäisches Patentamt
European Patent Office
Office européen des brevets

(11) **EP 1 014 551 A1**

(12) **DEMANDE DE BREVET EUROPEEN**

(43) Date de publication:
**28.06.2000 Bulletin 2000/26**

(51) Int Cl.⁷: **H02M 7/217**

(21) Numéro de dépôt: **99410176.4**

(22) Date de dépôt: **15.12.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (71) Demandeur: **STMicroelectronics S.A.**<br>**94250 Gentilly (FR)** |
| (30) Priorité: **17.12.1998 FR 9816155** | (72) Inventeur: **Peron, Benoît**<br>**37100 Tours (FR)**<br><br>(74) Mandataire: **de Beaumont, Michel**<br>**1, rue Champollion**<br>**38000 Grenoble (FR)** |

(54) **Convertisseur d'une haute tension alternative en une basse tension continue**

(57)  L'invention concerne un convertisseur d'une haute tension alternative (Vac) en une basse tension continue (Vs), comportant un interrupteur unidirectionnel (21) entre une première borne (11) d'application de la tension alternative et une première borne (13) positive de sortie, et des moyens (23, 24, 25, 26) pour asservir la tension (Vs) de sortie à une valeur souhaitée, l'interrupteur unidirectionnel étant commandé en régime linéaire.

Fig 4

EP 1 014 551 A1

Printed by Jouve, 75001 PARIS (FR)

**Description**

La présente invention concerne le domaine des alimentations non isolées destinées à alimenter une charge sous une basse tension continue obtenue à partir d'une haute tension alternative. De tels convertisseurs AC/DC se retrouvent dans la plupart des appareils électro-domestiques pour l'alimentation de composants basse tension tels que, par exemple, des circuits logiques (microprocesseurs, logique programmable), des actionneurs électromécaniques (relais) ou électroniques (triacs).

Dans de telles applications destinées à être alimentées par le secteur, les convertisseurs doivent respecter des normes de compatibilité électromagnétique (en particulier, les normes EN 55022, EN 55014, IEC 1000-4-11, IEC 1000-4-5).

On connaît essentiellement deux solutions capables de respecter ces normes tout en délivrant une puissance suffisante (de l'ordre du watt) pour l'alimentation de la plupart des cartes électroniques.

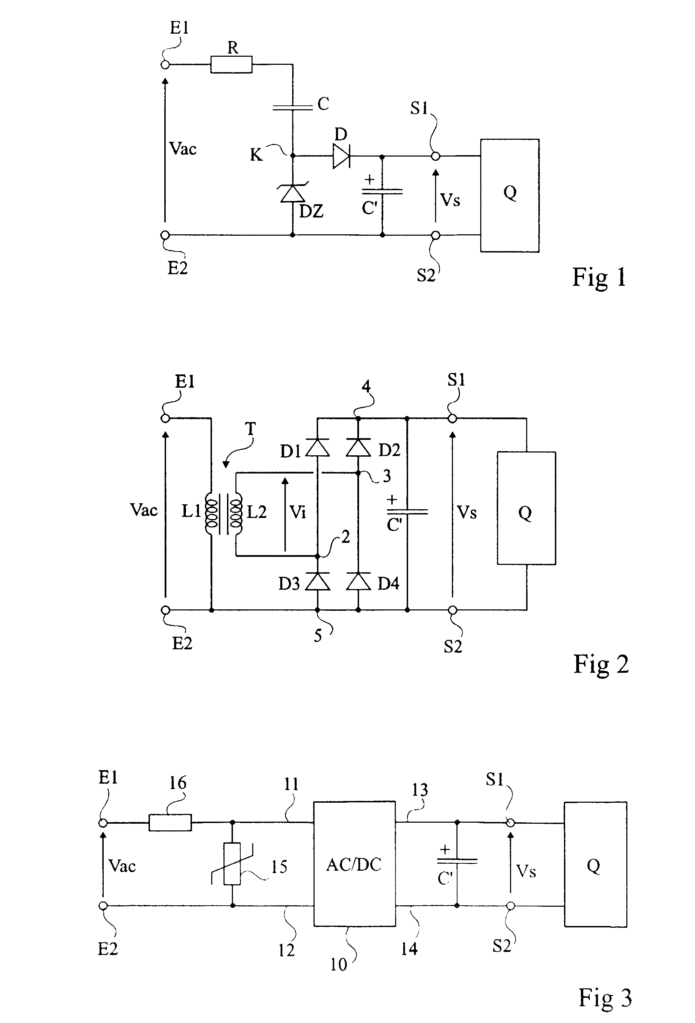

La figure 1 illustre, de façon très schématique, une première solution classique de convertisseur alternatif/continu. Un tel convertisseur est basé sur l'utilisation d'un condensateur C haute tension dit "de classe X" connecté, en série avec une diode Zener DZ, entre deux bornes E1, E2 d'application d'une haute tension alternative Vac (par exemple, le secteur 240V/50Hz ou 110V/60Hz). Une résistance R de faible valeur (de l'ordre de la centaine d'ohms) est généralement connectée entre la borne E1 et une première borne du condensateur C dont l'autre borne est connectée à la cathode K de la diode DZ. L'anode de la diode DZ est connectée à la borne E2. Le rôle de la résistance R est de limiter le courant à la mise sous tension du circuit. Le point milieu K de l'association en série du condensateur C avec la diode DZ est connecté, par l'intermédiaire d'une diode de redressement D, à la borne positive d'un condensateur basse tension C' aux bornes duquel est prélevée une tension de sortie continue Vs d'alimentation d'une charge Q entre des bornes de sortie, respectivement, positive S1 et de référence S2. S'agissant d'une alimentation non isolée, la borne S2 est confondue avec la borne E2 à laquelle est connectée la borne négative du condensateur C'.

Le condensateur haute tension C se comporte comme une impédance réactive permettant de limiter le courant dans la charge. Pendant les alternances positives de la tension Vac, le condensateur C laisse passer un courant dans la diode D et, par conséquent, dans le condensateur de filtrage C' et dans la charge. Dès que l'amplitude de la tension Vac devient supérieure à la tension seuil de la diode DZ (en négligeant la chute de tension dans la résistance R), le courant du condensateur C est dévié par la diode DZ, ce qui permet ainsi de réguler la tension de sortie Vs à la valeur de cette tension seuil. Pendant les alternances négatives de la tension Vac, la diode D est polarisée en inverse et la charge est alimentée par l'énergie accumulée dans le condensateur C'.

On notera que l'exemple de la figure 1, décrit en relation avec une tension Vac alternative et un redressement monoalternance à l'aide de la diode D, peut également être mis en oeuvre en plaçant un pont redresseur entre les bornes K et E2. Le condensateur de filtrage C' sert à rendre sensiblement constante la tension Vs aux bornes de la charge Q.

La figure 2 illustre, toujours de façon très schématique, un deuxième exemple classique de convertisseur d'une haute tension alternative vers une basse tension continue.

Comme précédemment, une haute tension alternative Vac est appliquée entre deux bornes E1, E2 d'entrée du convertisseur. Dans l'exemple de la figure 2, le convertisseur est réalisé à partir d'un transformateur T basse fréquence, c'est-à-dire fonctionnant à la fréquence du réseau de distribution de la tension alternative Vac. Les deux bornes d'un enroulement primaire Ll du transformateur T sont connectées aux bornes E1 et E2. Les deux bornes d'un enroulement secondaire L2 du transformateur T délivrent une basse tension alternative Vi dont l'amplitude crête correspond, dans cet exemple, à la valeur de la tension continue Vs souhaitée aux bornes S1, S2 de sortie du convertisseur pour alimenter la charge Q. Comme dans l'exemple de la figure 1, la tension Vs est prélevée aux bornes d'un condensateur de filtrage basse tension C'.

La basse tension alternative Vi est appliquée à deux bornes d'entrée alternative 2, 3 d'un pont de diodes D1, D2, D3, D4 dont les bornes de sortie redressée 4, 5 sont connectées aux bornes S1 et S2. Comme précédemment, il s'agit d'une alimentation non isolée, les bornes E2 et S2 étant confondues.

Dans l'exemple de la figure 2, la valeur de la tension de sortie Vs est fixée par le rapport de transformation, c'est-à-dire par le rapport entre le nombre de spires des enroulements L1 et L2 du transformateur T.

Les solutions décrites ci-dessus sont relativement simples à mettre en oeuvre en raison du faible nombre de composants auxquels elles ont recours. De plus, les composants peuvent être dimensionnés pour que les convertisseurs soient conformes aux exigences des normes de perturbations électromagnétiques. En outre, ces solutions permettent de commander directement des interrupteurs bidirectionnels (par exemple, des triacs) car elles possèdent un point commun avec le réseau de distribution.

Cependant, les deux solutions classiques décrites ci-dessus ont pour inconvénient essentiel leur encombrement et leur coût.

Le coût important de la première solution est lié au recours à un condensateur de classe X devant supporter la tension du réseau de distribution. Un tel condensateur se caractérise également par un encombrement important. Pour ces raisons, les convertisseurs mettant en oeuvre cette solution sont généralement limités à de faibles courants (inférieurs à 30 mA).

Pour la deuxième solution, le coût élevé et le volume important proviennent du recours à un transformateur. De plus, cette deuxième solution présente l'inconvénient d'engendrer des pertes importantes en raison de l'usage du transformateur. Cette deuxième solution est plus particulièrement destinée à des convertisseurs devant fournir des courants plus importants (entre 30 et 80 mA).

La présente invention vise à proposer une nouvelle solution pour réaliser un convertisseur d'une haute tension alternative en une basse tension continue qui pallie aux inconvénients des solutions connues.

L'invention vise, en particulier, à proposer une nouvelle solution dont l'encombrement soit minimisé. L'invention vise également à ce que la solution proposée respecte les contraintes de compatibilité électromagnétique.

La présente invention vise également à proposer un nouveau convertisseur qui s'adapte automatiquement au besoin en courant de la charge. Plus particulièrement, la présente invention vise à proposer une solution adaptée à une large plage de courants, c'est-à-dire qui permette, si besoin, de délivrer des courants sensiblement plus importants que les solutions classiques à condensateurs sans engendrer les pertes liées au fonctionnement d'un transformateur.

La présente invention vise en outre à ce que le convertisseur protège la charge contre des surintensités à la mise sous tension et maintienne l'alimentation de la charge même en cas de microcoupure de la tension d'alimentation alternative.

En outre, la présente invention vise à améliorer la régulation de la tension de sortie du convertisseur. A cet égard, on notera que, au sens de la présente invention, la référence à une tension de sortie continue correspond, en fait et sauf précision contraire, à une tension continue régulée, c'est-à-dire de valeur sensiblement constante.

Pour atteindre ces objets, la présente invention prévoit un convertisseur d'une haute tension alternative en une basse tension continue, comportant un interrupteur unidirectionnel entre une première borne d'application de la tension alternative et une première borne positive de sortie, et des moyens pour asservir la tension de sortie à une valeur souhaitée, l'interrupteur unidirectionnel étant commandé en régime linéaire.

Selon un mode de réalisation de la présente invention, le convertisseur est dépourvu de composant passif haute tension.

Selon un mode de réalisation de la présente invention, lesdits moyens d'asservissement comprennent un premier élément de fixation d'une tension de référence et de comparaison de cette tension de référence par rapport à la tension de sortie, un deuxième élément de fixation d'un courant de référence, et un premier moyen pour modifier un courant de commande de l'interrupteur unidirectionnel de façon linéaire à la fermeture et à l'ouverture.

Selon un mode de réalisation de la présente invention, ledit premier élément génère un signal d'erreur uniquement quand la tension de sortie est supérieure à la tension de référence.

Selon un mode de réalisation de la présente invention, ledit premier moyen est, au début et à la fin de chaque alternance de l'alimentation alternative, activé et désactivé à proximité du passage à zéro.

Selon un mode de réalisation de la présente invention, lesdits moyens d'asservissement comprennent en outre un deuxième moyen pour forcer la conduction de l'interrupteur unidirectionnel à la mise sous tension et en cas de microcoupure de l'alimentation alternative.

Selon un mode de réalisation de la présente invention, ledit deuxième moyen de gestion du démarrage des microcoupures est dimensionné pour être activé à l'intérieur d'une plage d'activation dudit premier moyen pour modifier linéairement le courant de commande de l'interrupteur unidirectionnel.

Selon un mode de réalisation de la présente invention, ledit interrupteur unidirectionnel est constitué d'un moyen de redressement en série avec un montage de type Darlington de transistors bipolaires.

Selon un mode de réalisation de la présente invention, une diode est connectée entre le collecteur commun desdits transistors bipolaires et la base d'un dernier transistor recevant un signal de commande, de façon à forcer le fonctionnement de ces transistors en régime linéaire.

Selon un mode de réalisation de la présente invention, le convertisseur est associé, en entrée, à une varistance de protection contre les surtensions et, de préférence, à une résistance de très faible valeur de protection de cette varistance.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 et 2 décrites précédemment sont destinées à exposer l'état de la technique et le problème posé ;

la figure 3 représente, de façon très schématique, un mode de réalisation d'un convertisseur alternatif-continu selon la présente invention ;

la figure 4 est un schéma fonctionnel d'un mode de réalisation d'un bloc de conversion monolithique d'un convertisseur selon la présente invention ;

la figure 5 illustre l'asservissement réalisé au moyen d'un convertisseur de la présente invention ; et

la figure 6 est un schéma électrique détaillé d'un mode de réalisation d'un convertisseur alternatif-continu selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite.

Une caractéristique de la présente invention est de prévoir un convertisseur d'une haute tension alternative en une basse tension continue sans recourir à des composants passifs de puissance et, en particulier, sans avoir recours à des éléments inductifs et capacitifs haute tension.

Ainsi, selon la présente invention et comme l'illustre schématiquement la figure 3, un convertisseur est constitué d'un circuit 10 (AC/DC), de préférence intégré monolithique, dont deux bornes 11, 12 d'entrée sont destinées à recevoir une haute tension alternative, et dont deux bornes 13, 14 de sortie sont destinées à délivrer une basse tension continue (non filtrée).

De façon classique, une charge Q devant être alimentée par une basse tension continue Vs prélève cette tension aux bornes SI, S2 d'un condensateur basse tension C'. Selon l'invention, le condensateur de filtrage C' est raccordé aux bornes 13, 14 de sortie du circuit 10.

En entrée, une varistance 15 ayant pour rôle d'écrêter, si besoin, la tension alternative d'entrée est, le cas échéant, prévue. Le recours éventuel à une telle varistance 15 dépend de la capacité de tenue en surtension du circuit 10 et, en particulier, de l'aire de sécurité de transistors qui le constituent comme on le verra par la suite.

La varistance 15 est connectée en parallèle avec le circuit 10, c'est-à-dire entre les bornes 11 et 12. Toujours de façon optionnelle, on pourra prévoir une résistance 16 de limitation du courant dans la varistance 15 en présence de surtension. Une telle résistance 16 est alors connectée entre une première borne E1 d'application d'une haute tension alternative Vac (par exemple, le secteur) et la borne 11. Une deuxième borne E2 d'application de la tension alternative Vac est confondue avec la borne 12.

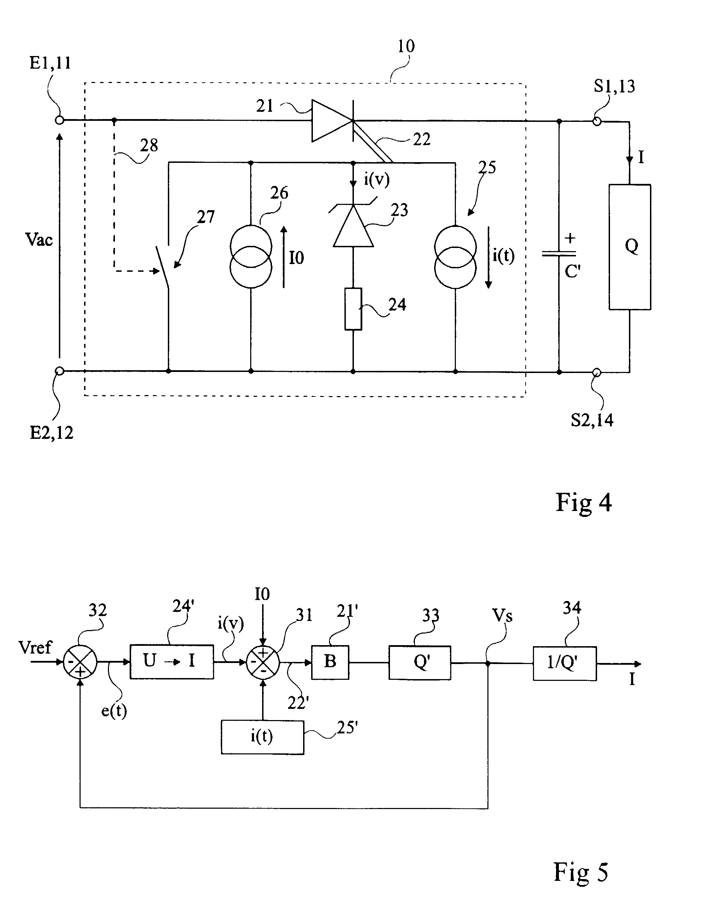

La figure 4 représente un schéma fonctionnel d'un convertisseur monolithique 10 selon la présente invention. A la figure 4, on suppose que la haute tension alternative d'entrée Vac est appliquée directement sur les bornes 11 et 12 du circuit monolithique 10, de sorte que les bornes E1, 11 et E2, 12 ont été représentées de façon confondue. De même, pour simplifier la représentation de la figure 4, les bornes S1, 13 et S2, 14 de sortie de la basse tension continue Vs ont été représentées confondues. On notera toutefois que le condensateur C' n'est pas intégré au circuit 10.

Selon la présente invention, le circuit 10 comporte, entre les bornes 11 et 13, un commutateur 21 unidirectionnel et commandable en linéaire, c'est-à-dire dont on peut faire varier, de façon linéaire, le courant qui le traverse. A la figure 4, le commutateur unidirectionnel linéaire 21 a été schématisé sous la forme d'un thyristor dont l'anode est connectée à la borne 11, dont la cathode est connectée à la borne 13, et dont la gâchette constituant la borne de commande 22 a été arbitrairement représentée de façon bifilaire pour symboliser la commande en régime linéaire. L'interrupteur 21 a, notamment, pour rôle d'amplifier un courant de commande faible amplitude (par exemple, de l'ordre du milliampère) en un courant de forte amplitude (par exemple, de l'ordre de la centaine de milliampère ou plus) à destination de la charge.

La borne 22 de commande du commutateur linéaire 21 est connectée à différents éléments de régulation d'un étage de commande qui seront décrits ci-après.

Un premier élément, symbolisé par une diode Zener 23, connectée entre la borne 22 et la ligne de référence (bornes 12 et 14), fournit une consigne de tension prédéterminée. Cet élément est, dans l'exemple représenté à la figure 4, associé en série avec un convertisseur tension-courant, symbolisé par une résistance 24, de manière à permettre une commande en courant du commutateur de puissance unidirectionnel 21. Un dépassement de la tension de référence (consigne) Vref par la tension entre les bornes 22 et 12 (donc par la tension Vs entre les bornes 13 et 14) entraîne la circulation d'un courant d'erreur i(v). Ce courant d'erreur i(v), prélevé sur la borne 22, réduit le courant I22 de commande du commutateur 21 et, par voie de conséquence, le courant I21 dans ce dernier (correspondant sensiblement au courant I dans la charge Q), donc tend à abaisser la tension Vs par diminution de la quantité d'énergie prélevée sur l'alimentation Vac.

Un deuxième élément, symbolisé par une source 25 de d'un courant variable i(t), est destiné à amortir les variations du courant I22 de commande du commutateur 21. Cet élément 25 fixe, notamment, la pente d'évolution de la correction en courant.

Un troisième élément, symbolisé par une source 26 de courant constant I0, fixe une consigne de courant prédéterminée, choisie en fonction de la puissance de la charge Q. Le courant i(v) du premier élément se retranche, lorsqu'une erreur apparaît, du courant constant I0.

Un quatrième élément, symbolisé par un interrupteur 27, sert au démarrage du circuit et à la gestion des microcoupures éventuelles de l'alimentation alternative Vac. Cet élément 27 qui, fonctionnellement, inhibe le fonctionnement de tous les autres éléments de l'étage de commande, est lui-même commandé par une mesure de la tension d'entrée Vac (symbolisée par la liaison en pointillés 28 entre la borne 11 et la borne de commande de l'interrupteur 27).

Une caractéristique de la présente invention est de combiner, au sein de l'étage de commande du composant linéaire 21, une régulation en tension et une régulation en courant. On effectue ainsi deux asservissements dits entrelacés, l'asservissement en tension permettant de contrôler la tension de sortie Vs tandis que l'asservissement en courant limite le courant prélevé sur l'alimentation. Un tel asservissement entrelacé permet notamment de réguler indépendamment les deux grandeurs de sortie (tension et courant).

Selon l'invention, l'interrupteur 21 est rendu passant deux fois par alternance de la tension Vac, le plus près possible du début et de la fin de l'alternance, et pour une faible durée par rapport à la durée de l'alternance.

L'amplitude du courant prélevé sur la tension alternative Vac dépend uniquement de l'écart entre la tension de consigne et la tension de sortie Vs (donc le niveau de charge du condensateur C' dont le rôle est de fournir l'énergie à la charge quand l'interrupteur 21 est ouvert). Le courant dans le composant linéaire 21 peut donc être asservi en fonction d'un signal d'erreur obtenu à partir d'une comparaison de la tension de sortie Vs par rapport à une valeur de référence.

On notera que tous les éléments constitutifs du circuit 10 sont réalisés sans avoir recours à des composants passifs haute tension.

Les seuls éléments passifs haute tension d'un convertisseur selon l'invention sont, le cas échéant, la varistance 15 et la résistance 16 (figure 3) qui ont respectivement pour rôle de limiter le courant dans la varistance et de limiter la tension aux bornes du circuit 10 d'alimentation monolithique.

A chaque alternance (ou une alternance sur deux) de la tension Vac, l'interrupteur 21 commence à charger le condensateur C' le plus près possible du début de l'alternance (en pratique, le plus près possible de l'instant où la tension Vac dépasse la tension Vs du condensateur C' en négligeant les chutes de tension en série entre les bornes 11 et 13). La durée de fermeture de l'interrupteur 21 est faible devant la période de la tension Vac. De même, l'interrupteur 21 se ferme à nouveau à proximité de la fin de l'alternance (l'amplitude de la tension Vac étant grande devant la tension Vs). Le courant I est asservi de façon linéaire pour réguler la tension Vs sur une très faible durée. Ainsi, aucun courant n'est prélevé sur l'alimentation alternative en dehors du voisinage du passage par zéro de l'alternance.

La figure 5 illustre, sous forme de blocs fonctionnels, l'asservissement réalisé au moyen d'un circuit selon la présente invention. Dans cette figure 5, les différents éléments destinés à asservir la tension de sortie et le courant prélevé sur l'alimentation ont été symbolisés par des blocs illustrant leurs fonctions de transfert respectives.

Un premier sommateur 31 de la figure 5 peut être assimilé au point d'interconnexion des éléments 26, 23 et 25 à la borne de commande 22 du composant linéaire 21 de la figure 4. Ce sommateur 31 soustrait deux signaux d'erreur i(v) et i(t) à un courant de référence I0. Le courant I0 correspond, en figure 4, à la source de courant 26.

Le signal d'erreur i(t) est prélevé par une source de courant symbolisée par le bloc 25' en figure 5.

Le courant i(v) est issu d'une conversion tension-courant symbolisée par un bloc 24' en figure 5 et correspondant à la résistance 24 en figure 4. Ce convertisseur 24' est chargé de convertir un signal d'erreur de tension e(t), provenant d'une comparaison de la tension de sortie Vs par rapport à une tension de référence Vref dans un sommateur 32. L'entrée positive du sommateur 32 reçoit la tension Vs tandis que son entrée négative reçoit une tension de référence Vref correspondant, à la figure 4, à la tension seuil de la diode Zener 23.

Une caractéristique de l'additionneur 32 est qu'il introduit l'erreur de tension e(t) dans l'asservissement de courant uniquement si cette erreur est positive. Ainsi, si la tension de sortie Vs est supérieure à la tension de référence souhaitée, alors l'erreur e(t) sera positive de manière à influer sur le courant de commande de l'interrupteur unidirectionnel linéaire 21. Par contre, si la tension de sortie Vs est inférieure ou égale à la tension de référence Vref, alors l'erreur e(t) est nulle de sorte que la régulation de tension n'intervient pas sur le courant. C'est, notamment, pour cette raison que l'élément de référence de tension 23 a été symbolisée en figure 4 par une diode Zener.

La sortie du premier sommateur 31 délivre un signal de commande 22' à un amplificateur linéaire symbolisé, en figure 5, par un bloc 21' (B). La sortie du bloc 21' constitue la sortie du circuit destiné à la charge.

En figure 5, pour tenir compte des conversions courant-tension nécessaires afin de faire figurer la tension Vs et le courant I dans la charge, cette dernière a été symbolisée par deux blocs 33 et 34 associés en série en sortie du bloc 21'. De plus, on a considéré la charge Q' du circuit 10, dont le condensateur C' fait partie. Un premier bloc 33 symbolise l'impédance de la charge Q' (C'+Q) et sa sortie représente la tension Vs envoyée sur une des entrées de l'additionneur 32 ainsi que sur l'entrée d'un deuxième bloc 34 qui représente l'admittance (1/Q') de la charge Q' et dont la sortie indique le courant I.

La source de courant d'erreur i(t) (25 en figure 4, 25' en figure 5) a notamment pour rôle d'introduire, dans l'asservissement, une erreur ayant une évolution linéaire au cours du temps de façon à rendre les commutations de courant à l'ouverture comme à la fermeture plus lentes. On réduit ainsi le taux d'harmoniques en haute fréquence de sorte que le courant I a une forme d'onde la plus proche possible d'un fondamental basse fréquence (inférieur au kilohertz). C'est ce qui permet, selon l'invention, de respecter les normes relatives aux perturbations radioélectriques conduites et rayonnées (normes de compatibilité électromagnétique).

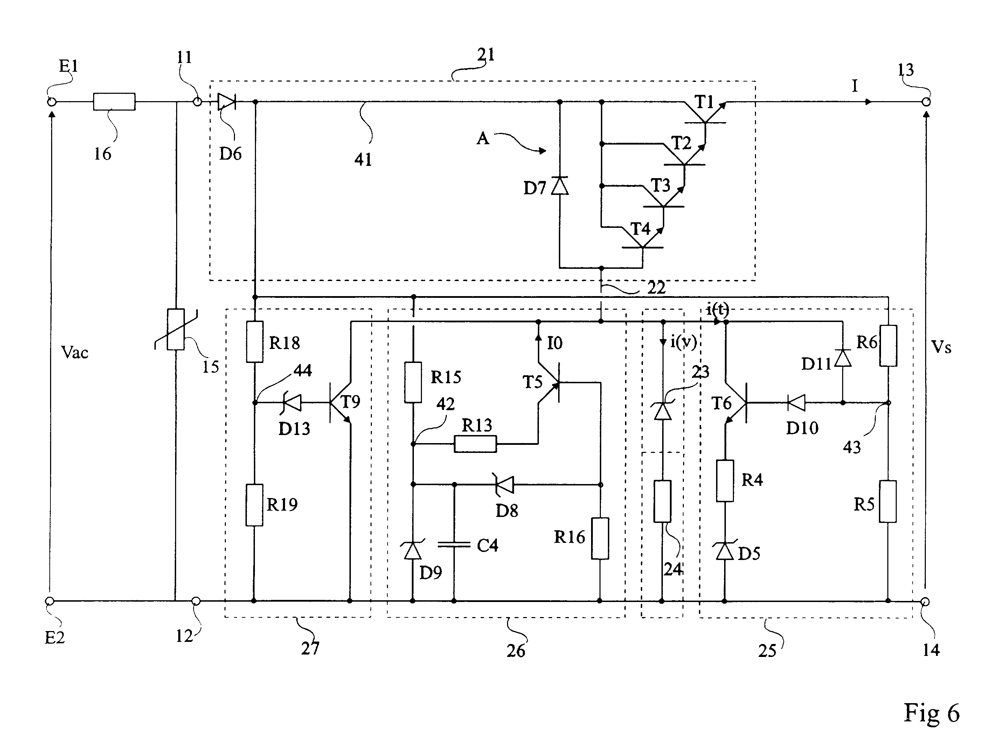

La figure 6 représente un mode de réalisation détaillé d'un convertisseur AC/DC selon la présente invention. Les différents éléments 21, 23, 24, 25, 26 et 27 d'un circuit monolithique tel qu'illustré par la figure 4 sont représentés à la figure 6 de façon détaillée en illustrant un mode de réalisation possible à partir de composants intégrables.

L'interrupteur de puissance unidirectionnel 21 est constitué d'un élément de redressement, par exemple une diode D6, dont l'anode est connectée à la borne d'entrée 11 et dont la cathode est connectée à une première borne de puissance 41 d'un moyen d'amplification A. Une deuxième borne de puissance du moyen d'amplification A est connectée à la borne de sortie 13 du circuit 10. Dans l'exemple représenté à la figure 7, l'élément d'amplification de puissance A est constitué de quatre transistors bipolaires haute tension T1, T2, T3 et T4, de type NPN, montés en structure Darlington. Ainsi, les collecteurs des quatre transistors T1, T2, T3, T4 définissent la première borne de puissance 41 connectée à la cathode de la diode D6. L'émetteur du transistor T1 est connecté à la borne 13. Sa base est connectée à l'émetteur du transistor T2 dont la base est connectée à l'émetteur du transistor T3 dont la base est connectée à l'émetteur du transistor T4. La base du transistor T4 constitue la borne 22 de l'interrupteur 21. Pour rendre linéaire le fonctionnement de l'interrupteur unidirectionnel 21, on prévoit une diode haute tension D7 entre la base du transistor T4 et son collecteur. Cette diode fixe la tension collecteur-émetteur du transistor T1 à une valeur sensiblement égale à trois chutes de tension base-émetteur (une des tensions base-émetteur des transistors étant compensée par la diode D7).

A titre de variante, on pourra utiliser un transistor MOS ou un transistor IGBT ou tout autre interrupteur unidirectionnel commandable de façon linéaire.

Le bloc 26 de génération d'un courant constant a, selon l'invention un double objectif. Un premier objectif, tel que cela a été décrit précédemment, est de fixer une consigne de courant I0. Un deuxième objectif est de polariser les quatre transistors bipolaires de l'interrupteur 21.

Ce bloc 26 est constitué d'un transistor bipolaire de type PNP T5 dont le collecteur est connecté à la borne 22 et dont l'émetteur est relié, par l'intermédiaire d'une résistance R13 en série avec une diode Zener D9, à la ligne de référence (bornes 12 et 14), l'anode de la diode D9 étant connectée à cette ligne de référence. Le point milieu 42 de l'association en série de la résistance R13 avec la diode D9 est connecté, par l'intermédiaire d'une résistance R15, à la borne 41 d'entrée de puissance de l'élément d'amplification A. La base du transistor T5 est connectée, par l'intermédiaire d'une résistance R16, à la ligne de référence ainsi que, par l'intermédiaire d'une diode Zener D8, au point 42, l'anode de la diode Zener D8 étant connectée à la base du transistor T5. Enfin, un condensateur C4 est connecté en parallèle sur la diode Zener D9.

Le courant de consigne I0 est fixé par la valeur de la résistance R13, la chute de tension base-émetteur Vbe5 du transistor T5 et la tension seuil V8 de la diode Zener D8. Le courant I0 (qui correspond au courant de collecteur du transistor T5) peut, en première approximation, s'exprimer sous la forme I0 = (V8 - Vbe5)/R13.

Le courant I0 est choisi pour être supérieur au courant de base minimal des transistors montés en Darlington dans l'interrupteur 21.

En négligeant le courant de base du transistor T5, la relation ci-dessus montre que le courant I0 est indépendant de la tension aux bornes du condensateur C4.

Le condensateur C4 sert, avec la diode Zener D9 et la résistance R15, à polariser le transistor T5. La résistance R15 permet de charger le condensateur C4 sous une tension redressée en monoalternance grâce à la diode D6. La diode Zener D9 fixe la tension maximale aux bornes du condensateur C4. On notera que la valeur seuil V9 de la diode D9 est supérieure à celle de la diode D8.

On notera également que la tension aux bornes du condensateur C4 (donc la tension seuil choisie pour la diode D9) est supérieure à la tension de sortie Vs majorée de la somme des quatre chutes de tension base-émetteur des transistors bipolaires T1, T2, T3, T4.

La tension de consigne Vref est fournie, de préférence, par une diode Zener 23 dont la cathode est connectée à la borne 22 et dont l'anode est connectée, par l'intermédiaire d'une résistance 24, à la ligne de référence (bornes 12 et 14). La résistance 24 joue le rôle d'un convertisseur tension-courant pour traduire l'écart entre la tension de sortie Vs et la tension de consigne Vref fixée par la diode 23 en un courant de commande i(v). Ce courant peut s'exprimer sous la forme (Vs - Vref)/R24, où Vref représente la tension seuil de la diode Zener 23 et où R24 représente la valeur de la résistance 24.

On notera que la tension seuil de la diode 23 sera choisie pour être inférieure à celle de la diode D9.

On notera également que la résistance 24 contribue au gain de l'asservissement en statique.

La source 25 de courant d'erreur destinée à obtenir une citation lente est, dans l'exemple représenté à la figure 6, constituée d'un transistor bipolaire T6 de type NPN dont le collecteur est connecté à la borne 22 et dont l'émetteur est connecté, par l'intermédiaire d'une résistance R4 en série avec une diode Zener D5, à la ligne de référence, l'anode de la diode D5 étant connectée à cette ligne de référence. La base du transistor T6 est reliée, par l'intermédiaire d'une diode D10, au point milieu 43 d'une association en série de résistances R6 et R5 entre la borne 41 et la borne 14. Le point 43 est également relié à la borne 22 par l'intermédiaire d'une diode D11 dont l'anode est connectée, comme l'anode de la diode D10, au point 43.

Le courant d'erreur i(t), introduit dans l'asservissement par le bloc 25, permet d'une part de fixer la durée de l'impulsion de courant puisée sur le réseau de distribution (tension Vac) et d'autre part de contrôler la fermeture et l'ouverture des transistors bipolaires de l'interrupteur 21.

L'instant de conduction du transistor T6 par rapport au début de chaque alternance de la tension Vac (de même que l'instant de blocage par rapport à la fin de l'alternance) est fixé par les valeurs des résistances R5 et R6 et par la tension seuil V5 de la diode D5. La valeur de la résistance R4 fixe la pente du courant i(t). La diode D5 est optionnelle et a pour rôle de permettre un fonctionnement stable en température.

Quand le courant i(t) croît, le courant de base du transistor T4 décroît. Ce courant de base I22 peut s'exprimer sous la forme I22 = I0 - i(t) - i(v).

On notera que le gain du transistor bipolaire basse tension T6 n'intervient pas sur la valeur du courant i(t), ce qui facilite la réalisation du circuit et, en particulier, le dimensionnement de ce transistor.

On notera également que, grâce à l'emploi de l'élément 25, l'évolution du courant I dans la charge n'est pas brusque lors des commutations mais est linéaire avec une pente fixée par cette source 25.

Toutefois, lors de la mise sous tension du convertisseur ainsi que lors de microcoupures éventuelles de l'alimentation Vac, il convient d'éviter que les transistors T1 à T4 de l'interrupteur 21 conduisent de façon non contrôlée par la présence du système de régulation.

Ainsi, selon la présente invention, on prévoit de préférence un élément 27 (figure 4) de démarrage et de gestion des microcoupures qui court-circuite les différents éléments 23, 24, 25, 26 d'asservissement du convertisseur.

Comme l'illustre la figure 6, cet élément de gestion de démarrage 27 est constitué, par exemple, d'un transistor bipolaire T9, de type NPN dont le collecteur est connecté à la borne 22 de l'interrupteur 21 et dont l'émetteur est connecté à la ligne de référence (bornes 12 et 14). La base du transistor T9 est reliée, par l'intermédiaire d'une diode Zener D13, au point milieu 44 d'une association en série de résistances R18 et R19 entre la borne 41 et la borne 12, la cathode de la diode D13 étant connectée au point 44. Les valeurs respectives des résistances R18 et R19 fixent, avec la tension seuil V13 de la diode Zener D13, l'instant de mise en conduction et de blocage du transistor T9 dans une alternance de l'alimentation alternative. Ce dimensionnement sera préférentiellement choisi pour que la mise en conduction du transistor T9 soit (au début d'une alternance) postérieure à la mise en conduction du transistor T6 de l'élément 25 afin d'éviter toute commutation brutale.

Plus précisément, la fermeture (au début de l'alternance) et l'ouverture (à la fin de l'alternance) du transistor T9 s'effectuent brusquement et, respectivement postérieurement et antérieurement à la fermeture et à l'ouverture du transistor T6 du bloc 25 qui s'effectuent elles de façon linéaire (progressive).

On notera donc que les dimensionnements des résistances R5, R6, R18 et R19 sont, notamment, choisis pour prélever l'énergie sur le réseau sous une faible tension, c'est-à-dire à proximité du passage par zéro de la tension alternative Vac.

On notera également que l'invention tire profit du fait qu'un condensateur basse tension C' est utilisé pour filtrer la tension Vs (ou que la charge Q présente une impédance au moins partiellement capacitive). Ainsi, la capacité du condensateur C' (majorée ou remplacée par la capacité de la charge Q) participe à l'intégration dans la boucle d'asservissement de façon à rendre cette boucle stable.

En reprenant le schéma de la figure 5, on peut établir la fonction de transfert d'une alimentation selon la présente invention. Cette fonction de transfert H(p) peut s'écrire sous la forme :

$$H(p) = B.Rq/(R24.(Rq.Cq'.p + 1)),$$

où Rq représente la résistance de la charge Q, où Cq' représente la capacité vue en sortie par le circuit 10 (par exemple, C' majorée de l'impédance capacitive de la charge), et où B représente le gain de l'interrupteur 21.

Cette fonction de transfert en boucle ouverte étant du premier ordre, le convertisseur selon l'invention a donc un comportement stable.

Les dimensionnements respectifs des différents composants constitutifs d'un convertisseur AC/DC selon la présente invention sont à la portée de l'homme du métier en fonction de l'application de ce convertisseur et des indications fonctionnelles données ci-dessus.

A titre d'exemple particulier de réalisation, un convertisseur illustré par la figure 6 pourra être réalisé, sous la forme d'un circuit intégré monolithique, avec les valeurs suivantes :

R4 = 1 kΩ,
R5 = 10 kΩ,
R6, R18 = 220 kΩ,
R13 = 6,9 kΩ,
R15, R16 = 56 kΩ,
R19 = 30 kΩ,
R24 = 4,7 kΩ,
V5, V8 = 3,9V,
V9 = 24V,
V13 = 10V,
Vref = 13V,
C4 = 22 µf/25V.

De façon externe au circuit monolithique, on pourra prévoir une résistance R16 de l'ordre d'une dizaine de ohms.

Le dimensionnement d'un convertisseur selon l'invention tel que décrit ci-dessus s'applique, par exemple, à une charge Q dont la capacité est telle que, majorée le cas échéant de la capacité C', la capacité vue par le circuit 10 est de l'ordre de 1000 µf et la résistance est supérieure à 150 Ω.

Un avantage de la présente invention est qu'elle permet la réalisation, sous la forme d'un circuit intégré monolithique, d'un convertisseur alternatif-continu de faible encombrement et de faible coût, tout en permettant un respect des différentes normes liées à une alimentation par le secteur, en particulier, les normes de compatibilité électromagnétiques.

Un autre avantage de la présente invention est que le courant I prélevé sur le réseau s'adapte automatiquement aux besoins de la charge, pour respecter une régulation stable en tension Vs.

Bien entendu, la présente invention est susceptible de diverses variantes et modifications qui apparaîtront à l'homme de l'art. En particulier, on pourra utiliser d'autres composants que ceux décrits en relation avec la figure 6 pourvu de respecter les fonctionnalités décrites en relation avec les figures 4 et 5. Par exemple, bien que l'invention ait été décrite ci-dessus en relation avec un composant opérant en entrée un redressement monoalternance (diode D6), ce redressement pourra être effectué en double alternance au moyen d'un pont de diodes. On notera toutefois que si l'application le permet, un redressement monoalternance minimise l'encombrement du moyen de redressement. En outre, bien que les éléments de régulation aient été exposés en combinant tous ces éléments, toute combinaison partielle pourra être prévue en fonction de l'application et du type de régulation souhaité.

**Revendications**

1. Convertisseur d'une haute tension alternative (Vac) en une basse tension continue (Vs), caractérisé en ce qu'il comporte un interrupteur unidirectionnel (21) commandé en régime linéaire entre une première borne (11) d'application de la tension alternative et une première borne (13) positive de sortie, en ce qu'il est dépourvu de composant passif haute tension, et en ce qu'il comporte des moyens (23, 24, 25, 26) pour asservir la tension (Vs) de sortie à une valeur souhaitée, ces moyens d'asservissement comprenant :

   un premier élément (23) de fixation d'une tension de référence (Vref) et de comparaison de cette tension de référence par rapport à la tension de sortie (Vs) ;
   un deuxième élément (26) de fixation d'un courant de référence (I0) ; et
   un premier moyen (25, 25') pour modifier un courant de commande (I22) de l'interrupteur unidirectionnel (21, 21') de façon linéaire à la fermeture et à l'ouverture.

2. Convertisseur selon la revendication 1, caractérisé en ce que ledit premier élément (23) génère un signal d'erreur (i(v), e(t)) uniquement quand la tension de sortie (Vs) est supérieure à la tension de référence (Vref).

3. Convertisseur selon la revendication 2, caractérisé en ce que ledit premier moyen (25) est, au début et à la fin de chaque alternance de l'alimentation alternative (Vac), activé et désactivé à proximité du passage à zéro.

4. Convertisseur selon l'une quelconque des revendications 1 à 3, caractérisé en ce que lesdits moyens d'asservissement comprennent en outre un deuxième moyen (27) pour forcer la conduction de l'interrupteur unidirectionnel (21) à la mise sous tension et en cas de microcoupure de l'alimentation alternative.

5. Convertisseur selon la revendication 4, caractérisé en ce que ledit deuxième moyen de gestion des microcoupures (27) est dimensionné pour être activé à l'intérieur d'une plage d'activation dudit premier moyen (25, 25') pour modifier linéairement le courant de commande de l'interrupteur unidirectionnel (21, 21').

6. Convertisseur selon l'une quelconque des revendications 1 à 5, caractérisé en ce que ledit interrupteur unidirectionnel (21) est constitué d'un moyen de redressement (D6) en série avec un montage de type Darlington de transistors bipolaires (T1, T2, T3, T4).

7. Convertisseur selon la revendication 6, caractérisé en ce qu'une diode (D7) est connectée entre le collecteur commun (41) desdits transistors bipolaires (T1, T2, T3, T4) et la base d'un dernier transistor (T4) recevant un signal de commande, de façon à forcer le fonctionnement de ces transistors en régime linéaire.

8. Convertisseur selon l'une quelconque des revendications 1 à 7, caractérisé en ce qu'il est associé, en entrée (11, 12), à une varistance (15) de protection contre les surtensions et, de préférence, à une résistance (16) de très faible valeur de protection de cette varistance.

Fig 1

Fig 2

Fig 3

E1,11

10

S1,13

Vac

28

21

22

25

27

26

I0

i(v)

23

24

i(t)

I

C'

Q

E2,12

S2,14

Fig 4

Vref

32

24'

i(v)

I0

31

21'

33

Vs

34

e(t)

U → I

B

Q'

1/Q'

I

22'

i(t)

25'

Fig 5

Fig 6

EP 1 014 551 A1

| | Office européen des brevets | RAPPORT DE RECHERCHE EUROPEENNE | Numéro de la demande EP 99 41 0176 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 195 16 796 A (THOMSON BRANDT GMBH) 14 novembre 1996 (1996-11-14) * le document en entier * --- | 1 | H02M7/217 |
| A | US 5 038 266 A (CALLEN PATRICK J ET AL) 6 août 1991 (1991-08-06) * abrégé; figure 1 * * colonne 1, ligne 43 - ligne 55 * * colonne 2, ligne 16 - ligne 22 * --- | 1 | |
| A | EP 0 763 878 A (THOMSON CONSUMER ELECTRONICS) 19 mars 1997 (1997-03-19) * colonne 1, ligne 16 - ligne 39; figure 3 * * abrégé; figures 1,2 * ----- | 1 | |

| | DOMAINES TECHNIQUES RECHERCHES (Int.Cl.7) |
|---|---|
| | H02M |

Le présent rapport a été établi pour toutes les revendications

| Lieu de la recherche | Date d'achèvement de la recherche | Examinateur |
|---|---|---|
| LA HAYE | 29 mars 2000 | Thisse, S |

**ANNEXE AU RAPPORT DE RECHERCHE EUROPEENNE
RELATIF A LA DEMANDE DE BREVET EUROPEEN NO.**

EP 99 41 0176

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2000

| Document brevet cité au rapport de recherche | | Date de publication | Membre(s) de la famille de brevet(s) | | Date de publication |
|---|---|---|---|---|---|
| DE 19516796 | A | 14-11-1996 | AUCUN | | |
| US 5038266 | A | 06-08-1991 | AUCUN | | |
| EP 0763878 | A | 19-03-1997 | CN | 1150351 A | 21-05-1997 |
| | | | JP | 9198150 A | 31-07-1997 |
| | | | SG | 44974 A | 19-12-1997 |

EPO FORM P0460